# FASCICULE DE BREVET EUROPEEN

(11) **EP 1 100 720 B1**
(45) Date de publication et mention de la délivrance du brevet: **04.02.2004**
(21) Numéro de dépôt: 99936676.8
(22) Date de dépôt: 03.08.1999
(51) Int. Cl.: B64D 1/22

(54) **DISPOSITIF SUSPENDU A UN ENGIN PORTEUR POUR LA RECUPERATION D'INDIVIDUS OU DE MATERIELS**
AN EIN TRÄGERFAHRZEUG ZUR PERSONNEN- ODER MATERIALBERGUNG AUFGEHÄNGTE VORRICHTUNG
DEVICE SUSPENDED TO A CARRIER FOR RESCUING PEOPLE OR EQUIPMENT

(30) Priorité: 06.08.1998 FR 9810109
(43) Date de publication de la demande: 23.05.2001
(73) Titulaire: Tardy, Jean-Francois, 76600 Le Havre (FR)
(72) Inventeur: Tardy, Jean-Francois, 76600 Le Havre (FR)
(74) Mandataire: Lepeudry-Gautherat, Thérèse (FR)
(86) Numéro de dépôt international: PCT/FR1999/001918
(87) Numéro de publication internationale: WO 2000/007877

(56) Documents cités:
- FR-E- 73 892
- US-A- 3 444 569
- US-A- 3 467 346
- US-A- 3 476 339
- US-A- 4 138 077

## Description

Le secteur technique de la présente invention est celui des dispositifs suspendus à un engin porteur pour le chargement d'objets ou l'embarquement de personnes, du type nacelles pouvant se déployer à partir d'un hélicoptère plus particulièrement appliquées à la récupération de personnes en danger.

Lors d'opérations de libération d'otages ou d'extraction de ressortissants, l'engagement opérationnel d'une unité est subordonné à la possibilité pour celle-ci de récupérer son élément d'intervention et les personnes civiles ou militaires, objet de l'intervention, prisonniers d'une situation ou susceptibles de l'être rapidement.

Cette phase de récupération terminale, engagée sous le signe de l'urgence, implique une notion de rapidité imposée par l'imminence d'une menace directe sur la vie de personnes, objets ou auteur de l'intervention.

Cette opération de récupération peut s'adresser à des personnes civiles ou militaires, blessées ou non, ayant ou non du matériel à emporter.

Dans ce domaine, plusieurs réalisations ont déjà été proposées.

La récupération de personnes situées dans des zones dites exposées nécessitant l'emploi d'hélicoptères implique, soit le posé de l'appareil, soit la mise en oeuvre d'un treuil ou du système dit de "la grappe".

Le posé de l'appareil est parfois impossible du fait de la configuration accidentée du terrain (rocheux, présence d'obstacles sur sa surface...) ou de la nature du milieu (boisé, maritime...).

L'emploi du treuil est limité par les capacités d'emport réduites qu'il offre et la lenteur de sa mise en oeuvre.

Le système dit de "la grappe" s'adresse exclusivement à des personnes munies d'un harnais d'arrimage. Sa mise en oeuvre est également très lente et n'autorise pas l'emport de personnes grièvement blessées ou ayant du matériel.

On connaît aussi par le US 4138077 un dispositif pliable et dépliable suspendu à un hélicoptère pour le sauvetage de personnes ou de matériels. Ce dispositif est héliporté sur les lieux de sauvetage en position.repliée. Un système motorisé permet ensuite son dépliage.

Dans le même domaine technique on connaît encore le brevet FR 2.399.855 qui décrit un filet de sauvetage en forme de cabine, susceptible d'être fixé au crochet porte charge d'un hélicoptère ou à l'hélicoptère lui-même.

Ce filet de sauvetage se compose notamment d'un cadre de base et d'un cadre supérieur ayant chacun la forme d'un carré, comportant à l'intérieur des cadres et latéralement entre ceux-ci des sangles de tension plates et souples en nylon ou polyester, pour constituer une structure en forme de cabine s'amincissant de bas en haut. En position dépliée, chacun des quatre côtés de cette cabine présente une ouverture d'accès, pratiquée dans les sangles latérales, pouvant être refermée par des courroies de fermeture pour des raisons de sécurité. Le cadre de base, plus grand que le cadre supérieur, se compose de deux moitiés pouvant pivoter l'une vers l'autre afin de loger entre-elles le cadre supérieur et les sangles latérales, pour replier l'ensemble du filet de sauvetage à la manière d'une valise. Ce filet de sauvetage, transporté replié à bord d'un hélicoptère sous une forme rectangulaire comparable à celle d'un paquet, se déplie de lui-même lorsqu'il est suspendu à l'anneau porteur et lâché à l'extérieur de l'hélicoptère.

Ce filet de sauvetage présente un certain nombre d'inconvénients liés en particulier à sa forme de cabine fermée en position dépliée.

De part cette forme, l'accès s'effectue exclusivement par les quatre ouvertures latérales, après décrochage des courroies de fermeture de ces ouvertures. La rapidité d'intervention se trouve ainsi pénalisée par le temps nécessaire au décrochage et à l'accrochage de l'ensemble de ces courroies.

Un inconvénient majeur de ce filet de sauvetage tient aux difficultés d'accès, celui-ci étant conditionné par la taille des ouvertures latérales, ainsi qu'aux possibilités d'entreposage limitées par la surface restreinte du cadre de base.

En position repliée, il présente également l'inconvénient de conserver un encombrement relativement important.

Un autre inconvénient, réside dans l'impossibilité de maîtriser le moment de son dépliage après sa sortie de l'hélicoptère. Ce qui est particulièrement pénalisant par la résistance au vent que peut présenter le filet déplié, au cours d'interventions se déroulant dans des conditions météorologiques défavorables.

Le but de la présente invention est de remédier aux inconvénients ci-dessus en proposant un dispositif de récupération de matériels et/ou de personnes à partir d'un engin porteur, notamment un hélicoptère, ayant une grande facilité et rapidité de mise en oeuvre.

La présente invention a également pour but de fournir un dispositif autorisant un accès rapide et simple pour des personnes valides ou blessées, y compris pour leur matériel d'intervention (armes par exemple) ou de secours (matériel médical), et quel que soit leur encombrement.

Un autre but de l'invention est de réaliser un dispositif présentant un encombrement minimum en position repliée, pour faciliter son transport à bord d'un hélicoptère.

Un autre but consiste également à permettre le déclenchement du dépliage ou ouverture d'une partie du dispositif, au moment voulu.

Pour ce faire, l'invention a pour objet un dispositif suspendu à un engin porteur pour la récupération d'individus ou de matériels, du type comportant un raccordement de l'engin à une nacelle pliable et dépliable formée d'une armature associée à un support souple. L'armature comprend, fixé au raccordement, un mât central relié à des moyens mobiles porteurs du support souple.

Le mât central comprend deux éléments télescopiques, l'un étant fixe et solidarisé par l'une de ses extrémités au raccordement, l'autre, relié aux moyens mobiles étant constitué d'un tube coulissant longitudinalement autour de l'élément fixe, pour assurer le pliage et dépliage des moyens mobiles et du support souple autour du mât central.

Les moyens mobiles comprennent de préférence des bras et des haubans articulés entre eux par l'une de leurs extrémités, leur autre extrémité étant également articulée respectivement avec la partie inférieure et la partie supérieure du tube.

Chaque hauban peut se composer de deux moitiés qui peuvent pivoter l'une vers l'autre en direction du mât central.

De préférence, le support souple de la nacelle dépliée se compose d'au moins trois éléments triangulaires juxtaposés et solidarisés avec au moins trois bras, l'ensemble de la nacelle pliée et dépliée présentant respectivement la forme d'un parapluie retourné fermé et ouvert.

Il peut comporter une cloche, constituée d'une pièce en forme de U renversé solidarisée en son centre à l'extrémité supérieure de l'élément fixe du mât, pour mainteir les extrémités supérieures des moyens mobiles de l'armature, lorsque la nacelle est pliée.

Il peut comporter également des moyens de verrouillage et déverrouillage de l'extrémité supérieure du tube avec la cloche, se composant d'au moins un verrou coopérant avec un embout d'accrochage, fixés respectivement à l'extrémité supérieure du tube et à la partie inférieure de la cloche, chaque verrou comportant un ressort associé à une bille se logeant dans une rainure de l'embout d'accrochage pour verrouiller la nacelle.

Le raccordement de l'engin à la nacelle peut être constitué par anneau de levage fixé à l'extrémité supérieure de l'élément fixe du mât.

Selon un mode de réalisation préférentiel, le déverrouillage est déclenché automatiquement depuis l'hélicoptère par un blocage de la descente d'un filin accroché à l'anneau de levage.

La nacelle peut comporter un filet d'assurance de forme conique disposé entre la partie inférieure de la cloche et la partie supérieure de chaque hauban.

Chaque élément triangulaire, constituant le support souple, peut être constitué d'un filet synthétique à mailles étroites formé de sangles plates et flexibles cousues entre-elles.

Ce dispositif présente l'avantage de permettre une récupération très rapide de personnes civiles ou militaires, blessées ou non, ayant ou non du matériel, et dont la vie est directement menacée ou susceptible de l'être de façon imminente.

Un autre avantage réside dans la forme originale de parapluie retourné ouvert de la nacelle dépliée, autorisant des possibilités d'accès illimitées tout autour de la nacelle. Ce qui représente un gain de temps très important lors des interventions.

En configuration pliée, le dispositif présente également l'avantage, en occupant un encombrement très réduit de se stocker facilement à bord d'un aéronef, permettant ainsi de ne pas altérer les capacités de vol de l'appareil jusqu'au lieu de récupération.

Après largage de l'aéronef, ce dispositif offre avantageusement une résistance au vent très réduite, en position repliée.

Un autre avantage réside aussi dans la totale maîtrise du moment de l'ouverture de la nacelle par rapport aux conditions de l'intervention.

D'autres caractéristiques et avantages de l'invention apparaîtront dans la description détaillée, non limitative, ci-dessous.

Cette description sera faite en regard des dessins annexés parmi lesquels :
- la figure 1 représente schématiquement une vue en coupe de profil du dispositif de récupération selon l'invention, avec la nacelle en configuration dépliée ;
- la figure 2 représente le dispositif de la figure 1, avec la nacelle pliée ;
- la figure 3 représente une vue en plan du support souple de la nacelle dépliée ;
- la figure 4 représente une vue partielle en coupe longitudinale du dispositif de récupération, montrant la nacelle pliée et verrouillée ;
- la figure 5 représente une vue selon la figure 4, avec la nacelle déverrouillée en phase de dépliage ;
- les figures 6 et 7 représentent des vues en coupe des moyens mobiles de l'armature de la nacelle.

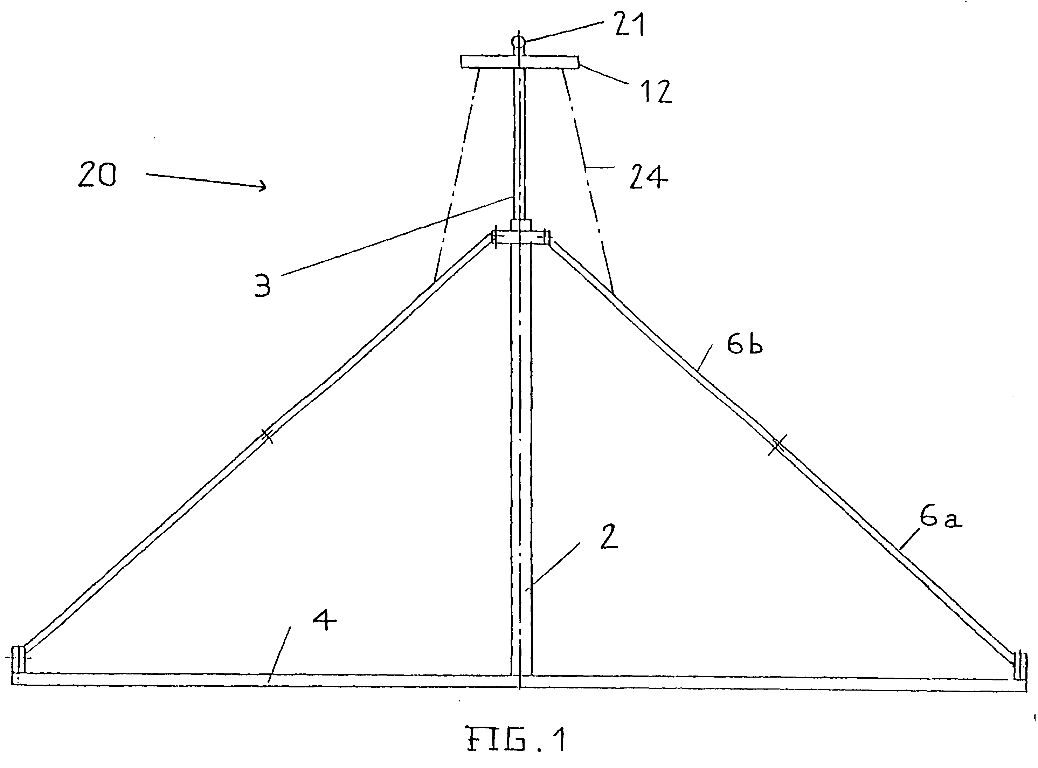

En référence aux figures 1 à 7 on voit un dispositif de récupération d'individus ou de matériels destiné à être suspendu à un engin porteur du type hélicoptère (non représenté).

Ce dispositif se compose d'une nacelle 20, formée d'une armature métallique associée à un support souple 23, et d'un anneau de levage 21 fixé à l'extrémité supérieure de l'armature et raccordé à l'hélicoptère par son filin ou par tout autre moyen.

L'armature de la nacelle comporte un mât central télescopique constitué d'un cylindre fixe 3, dont l'extrémité supérieure est soudée à l'anneau de levage 21, et d'un tube 2 coulissant longitudinalement autour du cylindre 3.

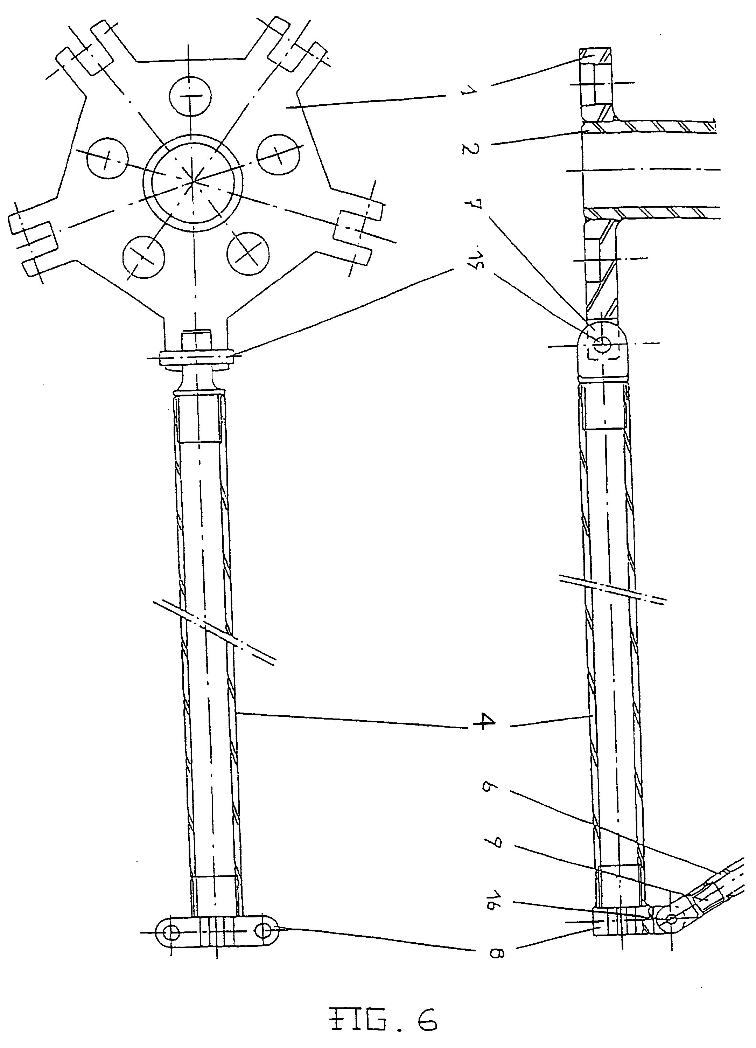

Sur le tube 2 sont articulés des moyens mobiles constitués par cinq bras 4 identiques formés d'un tube métallique et cinq haubans 6. L'une des extrémités de chaque bras 4 comporte une chape 7 munie d'un axe 15 raccordée à une embase 1 fixée à l'extrémité inférieure du tube 2. L'autre extrémité du bras comporte un embout 8 relié à l'une des extrémités du hauban 6 par une chape 9 munie d'un axe 16 (figure 6).

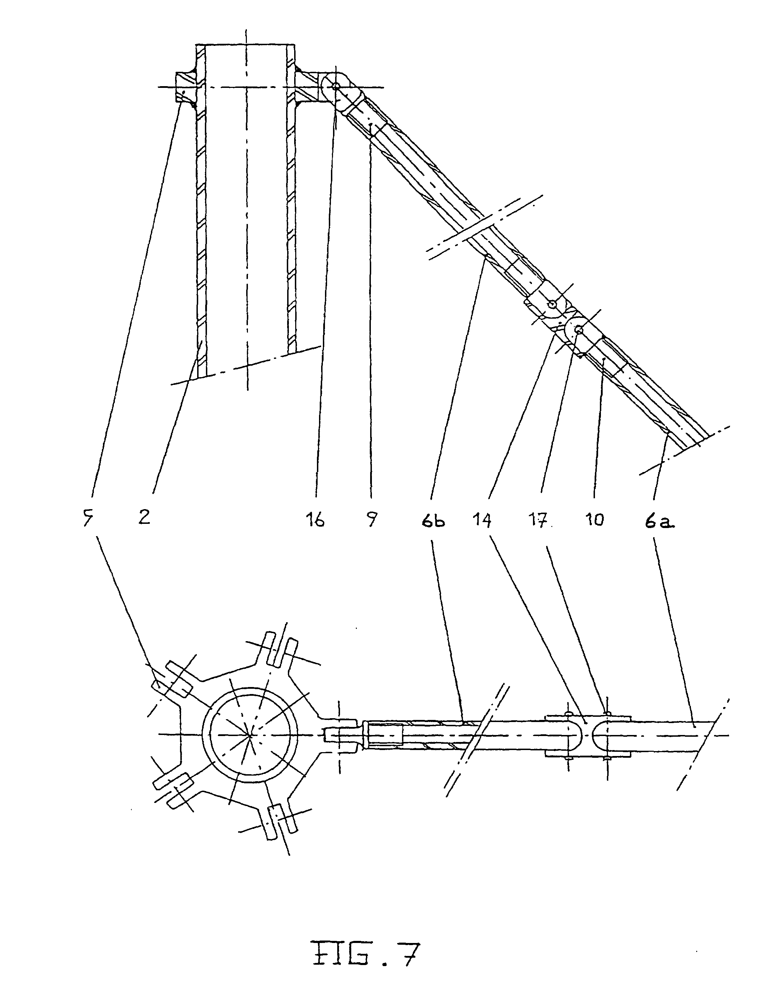

Chaque hauban 6 est constitué de deux moitiés 6a et 6b reliées respectivement à un bras 4 et au tube 2. Ces deux moitiés sont articulées entre-elles à l'aide de la chape 10, de l'éclisse 14 et de l'axe d'éclisse 17. La moitié supérieure 6b est reliée au tube 2 par l'intermédiaire d'une chape 9 et d'un axe 16 accrochés à une couronne 5 fixée par soudure sur l'extrémité supérieure du tube 2 (figure 7).

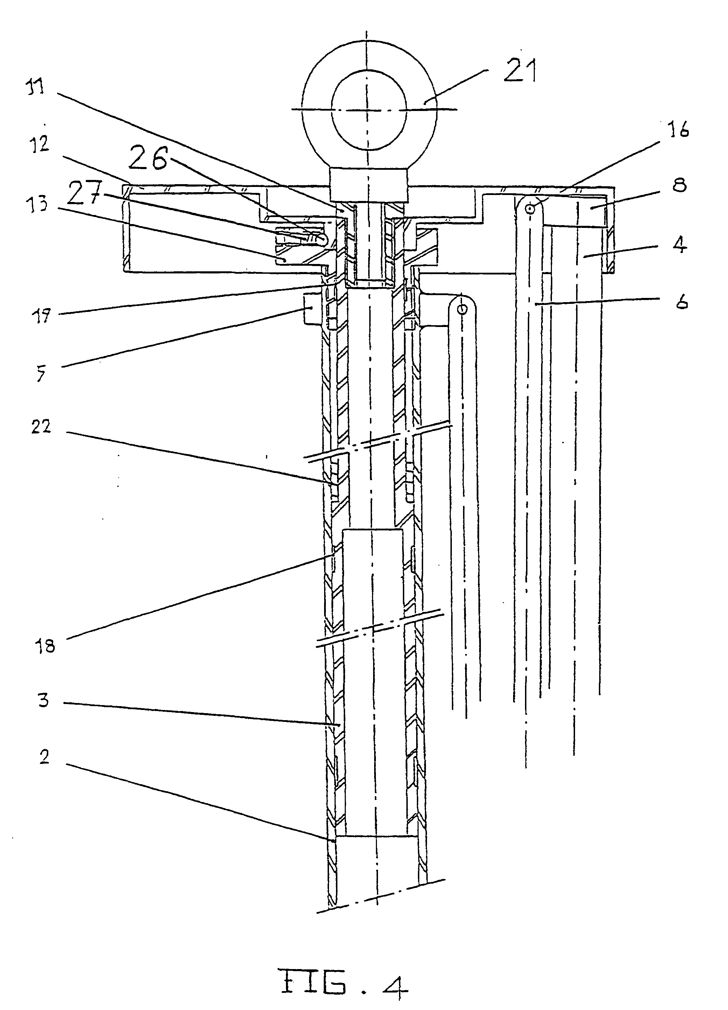

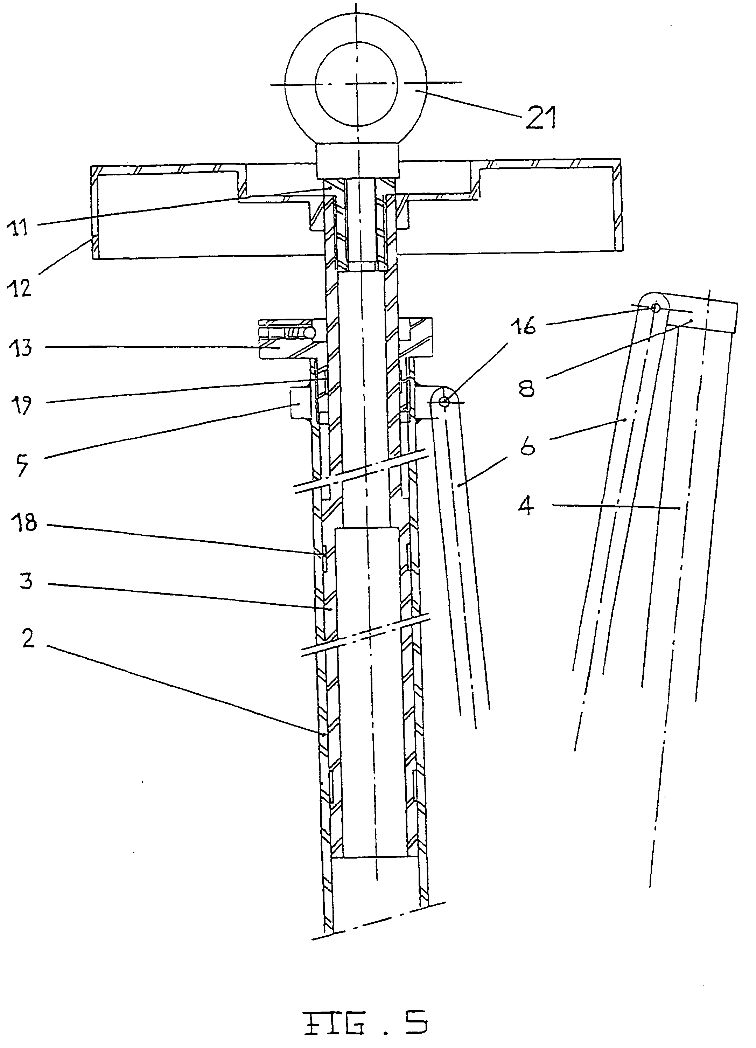

A l'extrémité supérieure de l'élément fixe 3 du mât est soudée une cloche 12 ayant la forme d'un U renversé (figures 4 et 5) pour maintenir les extrémités des bras et des haubans en position repliée. Cette cloche comporte dans sa partie centrale un embout d'accrochage 11 muni d'une rainure circulaire pour assurer le verrouillage de la nacelle à l'aide d'un verrou 13 fixé à l'extrémité supérieure du tube 2. Ce verrou comprend trois billes 26, associée chacune à un ressort 27, qui viennent se loger dans la rainure circulaire de l'embout d'accrochage 11.

A bord de l'hélicoptère, on dispose de moyens mécaniques (non représentés), du type mâchoires ou tout autre moyen connu, disposés autour du filin ou câble reliant l'hélicoptère à l'anneau de levage 21, pour bloquer brutalement la descente du filin et provoquer un choc dans ce dernier. Ce choc entraîne le déverrouillage automatique de chaque verrou. 13 suivi de l'ouverture de la nacelle.

Ces moyens mécaniques de déverrouillage automatique peuvent être remplacés ou complétés par une commande de déverrouillage manuelle connue (non représentée), constituée par exemple d'un câble ou tout autre moyen reliant le verrou 13 à un intervenant situé à bord de l'hélicoptère.

Le mât central comporte également, disposés entre l'élément fixe 3 et le tube 2, deux bagues de guidage 18 et 19 en matériau de type téflon et un ressort 22 pour amortir le choc en fin de course du tube sur l'élément fixe lors du dépliage de la nacelle.

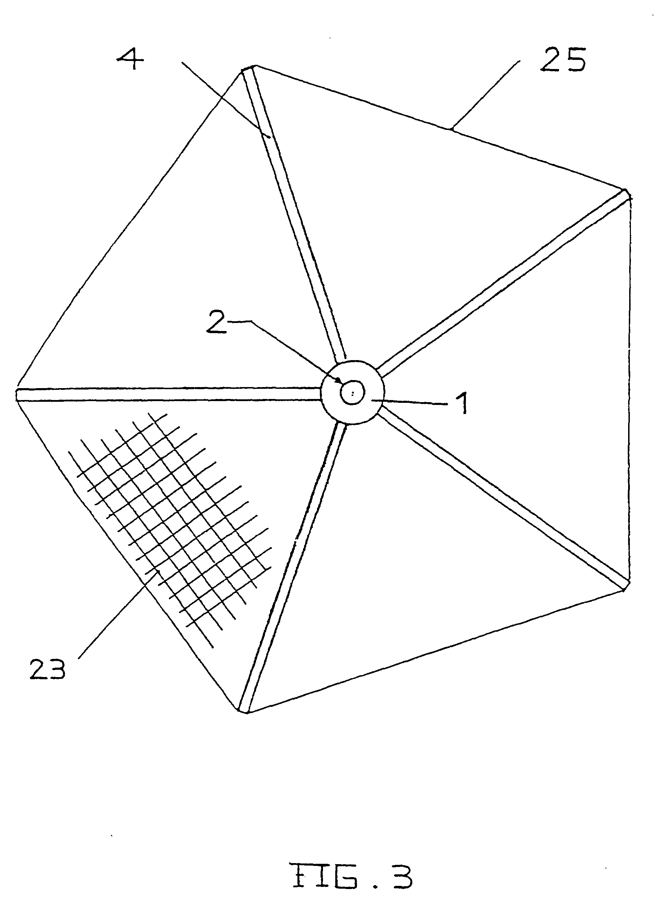

La base de la nacelle est constituée par le support souple 23 relié par tout moyen connu aux cinq bras 4 (figure 3).

Le support souple 23 est un filet composé de cinq éléments triangulaires juxtaposés pour constituer un support de forme pentagonale lorsque la nacelle est dépliée.

Chaque élément triangulaire est réalisé à partir de sangles synthétiques flexibles de largeur 25mm cousues entre-elles de manière à obtenir des mailles de 50mm de côté perpendiculaires aux côtés extérieurs du filet.

Six sangles de même type que les sangles du filet, disposées à égale distance et décalées de la largeur d'une sangle d'un côté à l'autre, seront cousues perpendiculairement aux côtés du filet pour permettre le maintien sur l'armature tubulaire de 35mm de diamètre.

Un renfort 25 en câble inoxydable de 5mm de diamètre gainé de plastique noir relie, par l'intermédiaire d'un embout serti, la base extérieure de chaque élément du filet à l'extrémité des cinq bras.

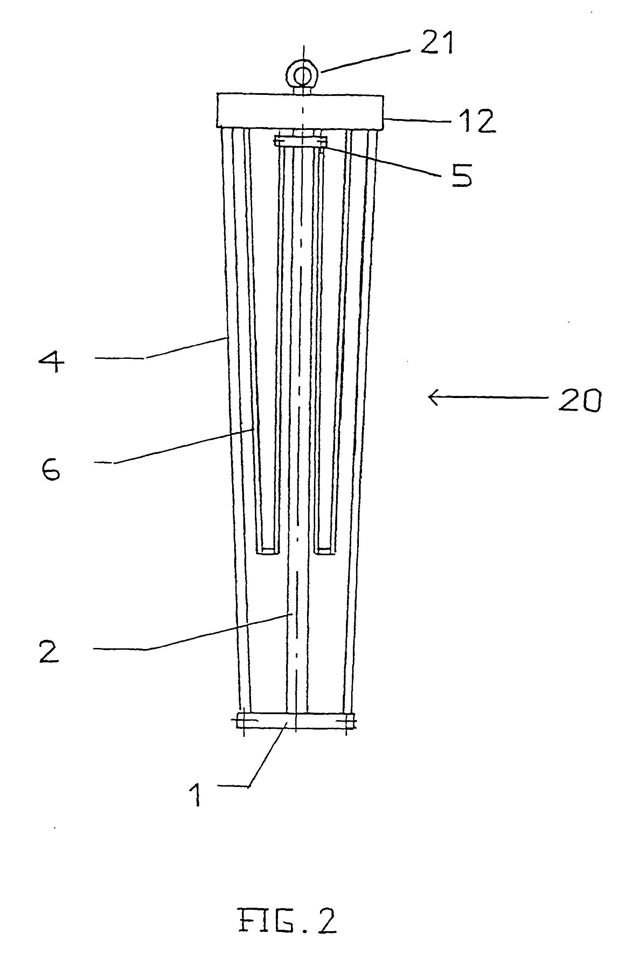

Le principe de cette nacelle s'apparente au schéma d'ouverture et fermeture d'un parapluie (figures 2 et 3).

La nacelle comporte également un filet d'assurance 24 de forme conique (figure 1), relié à la partie inférieure de la cloche 12 et à la partie supérieure des cinq haubans 6, pour permettre notamment une meilleure préhension aux personnes devant être récupérées.

Ce filet d'assurance 24 peut être réalisé de la même manière que le support souple 23.

La description ci-dessus montre un exemple de réalisation avec des moyens mobiles comportant cinq bras 4 et cinq haubans 6. Ainsi configuré, ce dispositif permet le transport d'une charge de 1250Kg uniformément répartie sur le support souple. En position pliée (figure 2), cette nacelle présente un diamètre de 0,40m et une hauteur de 1,60m.

Un dispositif plus léger à structure identique peut être réalisé en utilisant des moyens mobiles à trois bras et trois haubans.

Le fonctionnement du dispositif de récupération est le suivant.

En phase de récupération, le dispositif, en configuration nacelle pliée, est relié par une corde lisse au point d'ancrage de l'axe rotor situé à l'intérieur de l'hélicoptère. Le dispositif est alors largué au travers de la trappe centrale. Cette corde lisse va se dérouler en passant à l'intérieur d'une gouttière, disposée entre le point d'ancrage de l'axe rotor et la trappe, et qui actionnée manuellement permet une descente contrôlée du dispositif et son blocage qui détermine alors l'ouverture de la nacelle 20, par le choc provoqué dans le filin.

Ainsi, après une descente libre et au moment choisi, le freinage du filin réalisé au moyen de la gouttière, provoque le choc qui va autoriser l'ouverture de la nacelle.

Sous l'impact du choc, les trois billes 26 sortent de la rainure de l'embout d'accrochage 11 et libèrent la cloche 12 et l'élément fixe 3 du mât central.

Le tube 2 et les bras 4, entraînés par leur poids, glissent vers le bas (figure 5). Les extrémités des bras 4 et des haubans 6 sortent de sous la cloche 12.

Les bras et les haubans en se dépliant entraînent le déploiement du support souple 23, jusqu'à obtenir la forme d'un parapluie retourné ouvert, autorisant alors un accès rapide aux personnes et matériels à récupérer.

Dans son déplacement longitudinal autour de l'élément fixe 3, le tube est guidé par les bagues en téflon 18 et 19.

Le choc de fin de course est amorti par le ressort 22 (figure 4).

Le pliage de la nacelle est réalisé manuellement en effectuant la manipulation inverse, comparable à la fermeture d'un parapluie.

Bien entendu, diverses modifications peuvent être apportées par l'homme de l'art au dispositif de récupération qui vient d'être décrit, uniquement à titre d'exemple non limitatif, sans sortir du cadre de protection défini par les revendications annexées.

## Revendications

1. Dispositif suspendu à un engin porteur pour la récupération d'individus ou de matériels, du type comportant un raccordement (21) de l'engin à une nacelle (20) pliable et dépliable formée d'une armature associée à un support souple (23), l'armature comprenant, fixé au raccordement (21), un mât central (2,3) relié à des moyens mobiles (4, 6) porteurs du support souple (23), **caractérisé en ce que** le mât central comprend deux éléments télescopiques, l'un étant fixe (3) et solidarisé par l'une de ses extrémités au raccordement (21), l'autre, relié aux moyens mobiles (4, 6) étant constitué d'un tube (2) coulissant longitudinalement autour de l'élément fixe (3), pour assurer le pliage et le dépliage des moyens mobiles porteurs du support souple autour du mât central.

2. Dispositif selon la revendication 1, **caractérisé en ce que** les moyens mobiles comprennent des bras (4) et des haubans (6) articulés entre eux par l'une de leurs extrémités, leur autre extrémité étant également articulée respectivement avec la partie inférieure et la partie supérieure du tube (2).

3. Dispositif selon la revendication 2, **caractérisé en ce que** chaque hauban (6) est composé de deux moitiés (6a, 6b) qui peuvent pivoter l'une vers l'autre en direction du mât central.

4. Dispositif selon la revendication 3, **caractérisé en ce que** le support souple (23) de la nacelle (20) dépliée se compose d'au moins trois éléments triangulaires juxtaposés et solidarisés avec au moins trois bras (4), l'ensemble de la nacelle (20) pliée et dépliée présentant respectivement la forme d'un parapluie retourné fermé et ouvert.

5. Dispositif selon l'une quelconque des revendications précédentes, **caractérisé en ce qu'**il comporte une cloche (12), constituée d'une pièce en forme de U renversé solidarisée en son centre à l'extrémité supérieure de l'élément fixe (3) du mât, pour maintenir les extrémités supérieures des moyens mobiles (4, 6) de l'armature, lorsque la nacelle (20) est pliée.

6. Dispositif selon la revendication 5, **caractérisé en ce que** la nacelle (20) comporte également des moyens de verrouillage et déverrouillage (11,13) de l'extrémité supérieure du tube (2) avec la cloche (12).

7. Dispositif selon la revendication 6, **caractérisé en ce que** les moyens de verrouillage et déverrouillage se .composent d'au moins un verrou (13) coopérant avec un embout d'accrochage (11), fixés respectivement à l'extrémité supérieure du tube (2) et à la partie inférieure de la cloche (12).

8. Dispositif selon la revendication 7, **caractérisé en ce que** chaque verrou (13) comporte un ressort (27) associé à une bille (26) se logeant dans une rainure de l'embout d'accrochage (11) pour verrouiller la nacelle.

9. Dispositif selon l'une quelconque des revendications précédentes, **caractérisé en ce que** le raccordement (21) de l'engin à la nacelle (20) est constitué par anneau de levage (11) fixé à l'extrémité supérieure de l'élément fixe (3) du mât.

10. Dispositif selon les revendications 7 et 9, **caractérisé en ce que** le déverrouillage du verrou (13) est déclenché automatiquement par un blocage de la descente d'un filin accroché à l'anneau de levage (11).

11. Dispositif selon la revendication 10 **caractérisé en ce que** la nacelle comporte un filet d'assurance (24) de forme conique disposé entre la partie inférieure de la cloche (12) et la partie supérieure de chaque hauban (6).

12. Dispositif selon la revendication 4 **caractérisé en ce que** chaque élément triangulaire, constituant le support souple (23), est constitué d'un filet synthétique à mailles étroites formé de sangles plates et flexibles cousues entre elles.

## Claims

1. A device suspended from a carrier vehicle for the recovery of individuals or equipment, of the type comprising a connection (21) for connecting the vehicle to a foldable and unfoldable pod (20) formed by a framework combined with a flexible support (23), the framework comprising, fixed to the connection (21), a central mast (2, 3) connected to movable means (4, 6) carrying the flexible support (23), **characterised in that** the central mast comprises two telescopic elements, one being stationary (3) and secured by one of its ends to the connection (21), the other being connected to the movable means (4, 6) and being formed of a longitudinally sliding tube (2) around the stationary element (3), for the folding and unfolding of the movable means carrying the flexible support around the central mast.

2. A device according to claim 1, **characterised in that** the movable means comprise arms (4) and stays (6) articulated together at one of their ends, their other ends likewise being articulated with the lower part and the upper part of the tube (2), respectively.

3. A device according to claim 2, **characterised in that** each stay (6) consists of two halves (6a, 6b) which can pivot towards one another in the direction of the central mast.

4. A device according to claim 3, **characterised in that** the flexible support (23) of the unfolded pod (20) consists of at least three juxtaposed triangular elements secured with at least three arms (4), the complete folded and unfolded pod (20) having the shape of a closed and opened upside-down umbrella, respectively.

5. A device according to any of the preceding claims, **characterised in that** it comprises a cap (12) formed of an inverted U-shaped part secured at its centre to the upper end of the stationary element (3) of the mast, in order to keep the upper ends of the movable means (4, 6) of the framework in position when the pod (20) is folded.

6. A device according to claim 5, **characterised in that** the pod (20) also comprises means (11, 13) for locking and unlocking the upper end of the tube (2) with the cap (12).

7. A device according to claim 6, **characterised in that** the locking and unlocking means consist of at least one securing device (13) cooperating with a retaining device (11) at the upper end of the tube (2) and at the lower part of the cap (12), respectively.

8. A device according to claim 7, **characterised in that** each securing device (13) comprises a spring (27) in conjunction with a ball (26) which moves into a groove of the retaining device (11) in order to lock the pod.

9. A device according to any one of the preceding claims, **characterised in that** the connection (21) for connecting the vehicle to the pod (20) is formed of a lifting ring (21) fixed to the upper end of the stationary element (3) of the mast.

10. A device according to claims 7 and 9, **characterised in that** the unlocking of the securing device (13) is triggered automatically by stopping the descent of a rope attached to the lifting ring (21).

11. A device according to claim 10, **characterised in that** the pod comprises a safety net (24) of conical shape arranged between the lower part of the cap (12) and the upper part of each stay (6).

12. A device according to claim 4, **characterised in that** each triangular element constituting the flexible support (23) consists of a close-mesh synthetic net formed by lengths of flat, flexible webbing stitched together.

## Patentansprüche

1. An ein Trägerfahrzeug aufgehängte Vorrichtung zur Bergung von Personen oder Material, umfassend eine Verbindung (21) zwischen dem Trägerfahrzeug und einer Gondel (20), die auseinander- und zusammengeklappt werden kann, und die gebildet ist aus einem Gestell, das mit einem flexiblen Boden (23) verbunden ist, wobei das Gestell einen an der Verbindung (21) fixierten zentralen Mast (2, 3) umfasst, der durch bewegliche Halterungen (4, 6) mit dem flexiblen Boden (23) verbunden ist, **dadurch gekennzeichnet, dass** der zentrale Mast zwei Teleskopelemente umfasst, von denen eines (3) mit einem Ende an der Verbindung (21) fixiert und gesichert ist, und das andere mit den beweglichen Halterungen (4, 6) verbunden ist und aus einem Rohr (2) gebildet ist, das in Längsrichtung um das fixierte Element (3) gleitet und das Aufklappen und Zusammenklappen der beweglichen Halterungen des flexiblen Bodens um den zentralen Mast bewirkt.

2. Vorrichtung gemäss dem Anspruch 1, **dadurch gekennzeichnet, dass** die beweglichen Halterungen aus Trägern (4) und Streben (6) gebildet sind, die an einem ihrer Enden aneinandergefügt sind, und das andere Ende des einen mit dem unteren und das andere Ende des anderen mit dem oberen Teil des Rohrs (2) verbunden ist.

3. Vorrichtung gemäss dem Anspruch 2, **dadurch gekennzeichnet, dass** jede Strebe (6) aus zwei Hälften (6a, 6b) gebildet wird, die zueinander in Richtung des zentralen Mastes verdrehbar sind.

4. Vorrichtung gemäss dem Anspruch 3, **dadurch gekennzeichnet, dass** der flexible Boden (23) der auseinandergeklappten Gondel (20) aus mindestens drei aneinandergelegten dreieckförmigen Elementen gebildet ist, die mit mindestens drei Trägern (4) gehalten sind, wobei die gesamte auseinandergeklappte und zusammengeklappte Gondel (20) die Form eines umgedrehten geöffneten oder geschlossenen Regenschirms hat.

5. Vorrichtung gemäß einem der vorhergehenden Ansprüche, **dadurch gekennzeichnet, dass** sie eine Glocke (12) umfasst, die aus einem Teil in Form eines umgekehrten U gebildet ist, das in seiner Mitte mit dem oberen Ende des fixierten Elements (3) des Mastes verbunden ist, und die die oberen Enden der beweglichen Halterungen (4,6) des Gestells aufnimmt, wenn die Gondel (20) zusammengeklappt ist.

6. Vorrichtung gemäss dem Anspruch 5, **dadurch gekennzeichnet, dass** die Gondel (20) auch Mittel zur Verriegelung und Entriegelung (11, 13) des oberen Endes des Rohrs (2) mit der Glocke (12) aufweist.

7. Vorrichtung gemäss dem Anspruch 6, **dadurch gekennzeichnet, dass** die Mittel zur Verriegelung und Entriegelung aus mindestens einem Riegel (13) bestehen, der mit einer Falle (11) zusammenwirkt, die jeweils an dem oberen Ende des Rohrs (2) und an dem Unterteil der Glocke (12) befestigt sind.

8. Vorrichtung gemäss dem Anspruch 7, **dadurch gekennzeichnet, dass** jeder Riegel ( 13) eine Feder (27) aufweist, die mit einer Kugel (26) verbunden ist, die zur Verriegelung der Gondel in eine Nut in der Falle (11) einrastet.

9. Vorrichtung nach einem der vorhergehenden Ansprüche, **dadurch gekennzeichnet, dass** die Verbindung (21) zwischen dem Fahrzeug und der Gondel (20) über eine Trageöse (21)hergestellt ist, die am oberen Ende des fixierten Elements (3) des Mastes angebracht ist.

10. Vorrichtung gemäß den Ansprüchen 7 und 9, **dadurch gekennzeichnet, daß** das Lösen des Riegels (13) selbsttätig ausgelöst wird durch Blockieren des Absenkens eines leichten Taus, das an der Trageöse (21)fixiert ist.

11. Vorrichtung gemäß dem Anspruch 10, **dadurch gekennzeichnet, dass** die Gondel ein Sicherheitsnetz (24) mit konischer Form aufweist, das zwischen dem unteren Teil der Glocke (12) und dem oberen Teil jeder Strebe (6) angebracht ist.

12. Vorrichtung gemäß dem Anspruch 4, **dadurch gekennzeichnet, dass** jedes der dreieckigen Elemente, die den flexiblen Boden (23) bilden, aus einem künstlichen engmaschigen Netz besteht, das aus flachen und flexiblen miteinander vernähten Gurten gebildet ist.
